# EUROPEAN PATENT APPLICATION

(11) **EP 3 202 677 A1**
(43) Date of publication of application: **09.08.2017**
(21) Application number: 15846741.5
(22) Date of filing: 26.08.2015
(51) Int. Cl.: B65C 9/06, B65B 35/44, B65B 35/46, B65G 19/02

(54) **CONTAINER CONVEYANCE DEVICE**

(30) Priority: 30.09.2014 JP 2014201894
(71) Applicant: Fuji Seal International, Inc., Osaka-shi, Osaka 532-0003 (JP)
(72) Inventor: USHIDATE, Toshiyuki, Osaka-shi Osaka 532-0003 (JP); KAWAUCHI, Yasuyuki, Osaka-shi Osaka 532-0003 (JP)
(74) Representative: Winter, Brandl, Fürniss, Hübner, Röss, Kaiser, Polte - Partnerschaft mbB
(86) International application number: PCT/JP2015/073933
(87) International publication number: WO 2016/052014

(57) **Abstract**

The present invention makes possible the setting of the pitch of container packs, which comprise multiple containers as a unit, so as to have the array pitch of a mandrel unit in a subsequent film-fitting step and suspended conveyance thereof. A container conveyance device (14) is for setting the pot pitch of various containers (C) in a container conveyance direction (A) so as to have a prescribed pitch that is equal to the array pitch of a mandrel head in a film-fitting step. The container conveyance device (14) is provided on both sides of a container conveyance path (25) with multiple moving claws (24) that move along the container conveyance direction (A). Each moving claw (24) has a supporting upper surface (24a) that contacts the lower surface of flanges (F) of respective containers (C) to suspend and support the containers, and a front end circumferential surface (24b) that fits between the pot sections (P) of the respective containers (C) and contacts the respective circumferences of two pot sections (P) that are adjacent in the conveyance direction. When the containers (C) are continuously conveyed, a moving claw (24) fits between the two pot sections (P) and the spacing between the two pot sections (P) is set to the prescribed pitch (PP).

## Description

### TECHNICAL FIELD

The present invention relates to a container transport device, and, in particular, to a container transport device for transporting a container having a pot portion containing contents with an opening of the pot portion being sealed by a lid, toward a film fitting step of fitting a film on an outer periphery of the pot portion.

### BACKGROUND

A container pack including a plurality of containers that are integrally connected by flange portions of the containers, each container containing food, such as yogurt, or other contents, has been known in the art. A single production apparatus may be used to perform a series of production process for such a container pack including the steps of supplying a sheet of flat resin material to a forming die, then continuously recessing a plurality of pot portions that serve as portions in which the containers contain contents, subsequently filling contents into the pot portions, and hermetically sealing the top openings of the pot portions of the containers by a sheet lid.

To attach labels on the outer circumferential surfaces of the pot portions in such a production apparatus, there may be employed for example, a method including the steps of placing tubular labels on inner surfaces of recesses of female dies for forming the pot portions, and affixing the labels to the outer circumferential surfaces of the pot portions as heat applied during the formation causes a heat-sensitive adhesive present on inner surfaces of the tubular labels to exhibit adhesion when male dies push resin material into the recesses of the female dies.

In another method, labels may be attached on the outer circumferential surfaces of the pot portions after, as described above, the pot portions of the containers are filled with contents and sealed by a lid. For example, Patent Document 1 discloses a labelling device for labelling containers by continuously transporting a plurality of containers in a suspended manner with the containers being in two rows and top openings of the containers being hermetically sealed by a suitable lid after the containers are formed and filled with contents in a series of process, fitting heat-shrinkable labels on outer peripheries of the containers from below at a midpoint of the transport, and then heat-shrinking the labels with lower ends of the labels being supported by a movable plate that has lifted the labels for fitting the labels onto the containers.

Patent Document 2 discloses a labelling device for labelling pot portions of containers by continuously transporting container packs using a suction belt in a suspended manner, each container pack including three containers (or six containers in a 2 x 3 arrangement) that are integrally connected by flange portions, jetting heat-shrinkable tubular labels from a label supply unit disposed below the suction belt with the labels being in an open state to fit the labels on peripheries of the pot portions of the containers at a midpoint of the transport, and then heat-shrinking the labels by heating means.

### CITATION LIST

### PATENT LITERATURE

Patent Document 1: JP 4729667 B
Patent Document 2: WO 2014/006033

### SUMMARY

### TECHNICAL PROBLEM

In the above-described device disclosed in Patent Document 1, because a plurality of containers on which labels are to be attached are transported to the labelling device after they are produced in a series of processes including the steps of forming pot portions, filling contents, and hermetically sealing the pot portions by a lid, the pitch between the pot portions of the containers that are adjacent to each other in a container transport direction is constant and the same as the pitch with which the containers are formed. Therefore, labels can be relatively stably attached on the containers that are transported with a constant pitch in this manner.

In contrast, in the device disclosed in Patent Document 2, when container packs that are split such that each container pack includes a predetermined number of, three or six, containers are continuously transported using a suction belt in a suspended manner and heat-shrinkable tubular labels are released to the containers from below to fit the labels at a midpoint of the transport, if variation arises in the transport pitch between the container packs that are being transported, it is necessary to accurately control the timing at which labels are released from mandrels. As a result, the control is complicated, and labelling failure is likely to occur. This tendency is prominent especially when productivity is to be improved by increasing the container transport speed.

The present invention is directed toward providing a container transport device that can transport containers that are individually separated or container packs each integrally including a plurality of containers in a suspended manner while pitch-feeding is being performed with a pitch corresponding to an arrangement pitch of mandrel units that are arranged with a constant pitch in a subsequent film fitting step.

### SOLUTION TO PROBLEM

According to one aspect of the present invention, there is provided a container transport device for transporting containers, each container having a pot portion containing contents and a flange portion laterally projecting from an outer periphery of an upper portion of the pot portion with a top opening of the pot portion being sealed by a lid, in a suspended manner with the pot portions being in a single row or a plurality of rows toward a subsequent film fitting step of fitting films on the outer peripheries of the pot portions, wherein the container transport device performs pitch-feeding to adjust a pot pitch of the containers in a container transport direction to a predetermined pitch that is equal to an arrangement pitch of mandrel heads for fitting tubular films on the outer peripheries of the pot portions in the film fitting step, wherein a plurality of moving tabs that move in the container transport direction are disposed on both sides or only on one side of a container transport path, each of the moving tabs having a supporting upper surface that comes into abutment with lower surfaces of the flange portions of the containers to support them in a suspended manner, and having a tip outer circumferential surface that fits between the pot portions of the containers to come into contact with outer peripheries of two pot portions that are adjacent to each other in the transport direction, and wherein, while the containers are being continuously transported, each of the moving tabs fits between a pot portion of a container located upstream in the transport direction and a pot portion of the following adjacent container to perform the pitch-feeding with the pot pitch of the containers being adjusted to the predetermined pitch.

In the container transport device according to the present invention, the pot portions of the containers have side surfaces that are tapered from upper ends toward lower ends, and the tip outer circumferential surface of each of the moving tabs may come into contact with outer peripheries of the upper ends of the pot portions that are contiguous to the flange portions.

Further, in the container transport device according to the present invention, it is preferred that the tip outer circumferential surface of each of the moving tabs has a semicircular shape, and the moving tabs are attached to a circulating belt or chain with the predetermined pitch so as to enter the container transport path that is linear, along a circular movement trajectory.

Further, in the container transport device according to the present invention, a container pack including a plurality of containers that are integrally connected to each other by edges of the flange portions is transported with the containers being in a plurality of rows in a direction perpendicular to the container transport direction, and a sag preventing component for preventing sagging of an intermediate portion of the container pack containing the contents by supporting the lower surfaces of the flange portions that integrally connect the containers of the container pack may be disposed along the container transport direction.

### ADVANTAGEOUS EFFECTS OF INVENTION

In the container transport device according to the present invention, each of a plurality of moving tabs that move in the container transport direction on both sides or only on one side of the container transport path fits between a pot portion of a container located upstream in the transport direction in which containers are continuously transported and a pot portion of the following adjacent container; as such, the containers are transported in a suspended manner while pitch-feeding is being performed with a pot pitch of the containers corresponding to the predetermined arrangement pitch of the mandrel units for the label fitting step. This configuration allows transport of the containers with the transport pitch of the pot portions of the containers being adjusted to correspond to the arrangement pitch of the mandrel heads in the subsequent label fitting step, and the label fitting operation of fitting labels on the outer peripheries of the pot portions of the containers can be performed reliably and stably.

### BRIEF DESCRIPTION OF DRAWINGS

FIG. 1 is a front view illustrating an overall structure of a label fitting system including a container transport device according to an embodiment of the present invention.
FIG. 2 is a top view of the label fitting system illustrated in FIG. 1 as viewed from above.
FIG. 3(a) illustrates a top view and a side view of a 4-pot pack, FIG. 3(b) illustrates a top view and a side view of a 2-pot pack, and FIG. 3(c) illustrates a top view and a side view of a 6-pot pack.
FIG. 4 illustrates a state in which a flange portion of a following container pack has climbed up onto a flange portion of a leading container pack in a container storage section.
FIG. 5 is a top view illustrating a manner in which moving tabs serving as important components in a container transport device circulate.
FIG. 6 is a cross-sectional view taken along B-B in FIG. 5.
FIG. 7 is an enlarged view illustrating a state in which a moving tab engages with flange portions of a container pack.
FIG. 8 illustrates, step by step, a manner in which moving tabs enter between pot portions of containers along a circular movement trajectory.
FIG. 9 is a front view of a label forming unit.
FIG. 10 is a side view of the label forming unit.
FIG. 11 illustrates only mandrel heads of a label fitting unit as viewed from above.
FIG. 12 is a cross-sectional view taken along G-G in FIG. 11.
FIG. 13(a) is a front view including a partial cross section of mandrel heads, FIG. 13(b) is a cross-sectional view taken along H-H in FIG. 13(a), and FIG. 13(c) is a cross-sectional view taken along I-I in FIG. 13(a).
FIG. 14(a) is a front view illustrating a state of the mandrel heads at a label supply position, and FIG. 14(b) is a front view illustrating a state of the mandrel heads at a label fitting position.
FIGs. 15(a) through 15(l) sequentially illustrate the operation in a label fitting operation of the mandrel heads.

### DESCRIPTION OF EMBODIMENTS

An embodiment of the present invention will be described in detail below with reference to the accompanying drawings. Specific shapes, materials, values, directions, or other features described herein are provided by way of illustration for ease of understanding of the present invention and may be changed as desired in accordance with the use, purpose, requirements, or other factors. If the following description includes two or more embodiments or other modifications, it is already contemplated that the features employed therein may be used in any desired combination.

In the illustrated embodiment, a tubular film to be attached on an outer periphery of a pot portion of a container is a heat-shrinkable label. However, the tubular film may be any tubular film other than a label, such as a heat-shrinkable transparent film for bundling an attachment product together with a container.

Although, in an example in the following description, a label fitting system transports and fits a label on a 4-pot pack, which is a container pack integrally including two rows by two sets of, a total of four, containers, each container containing contents such as yogurt, a container transport device and a label fitting unit according to the illustrated embodiment are not limited to this example. The illustrated embodiment may be applied to, for example, a 2-pot pack integrally including two rows by one set of, a total of two, containers, a 6-pot pack integrally including two rows by three sets of, a total of six, containers, or a 9-pot pack integrally including three rows by three sets of, a total of nine, containers, or may also be applied to a case where labels are fitted on containers that are individually separated, while the containers are being transported continuously.

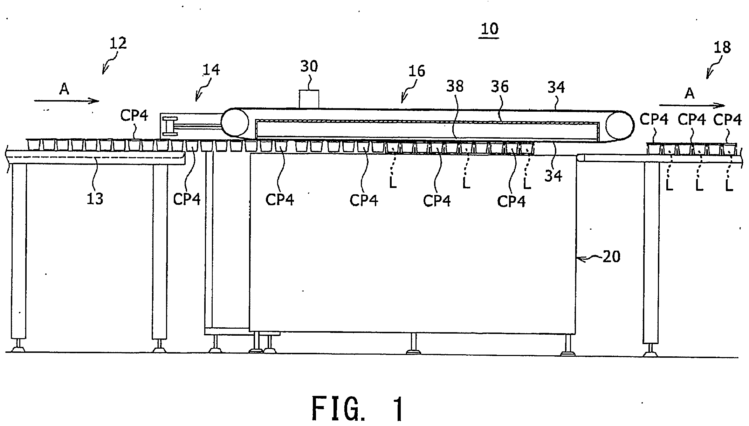

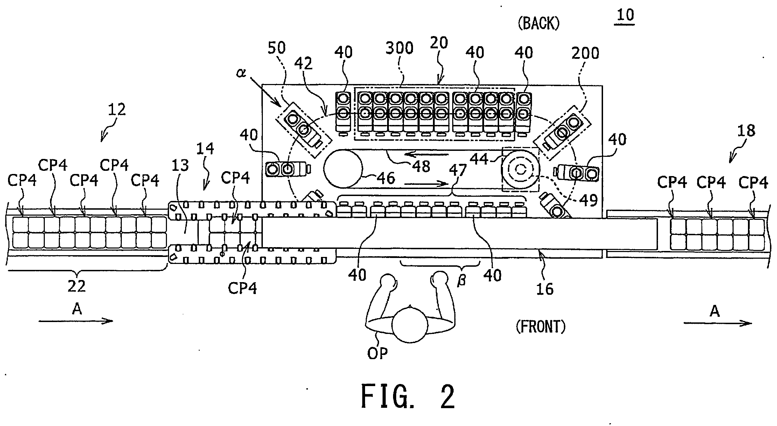

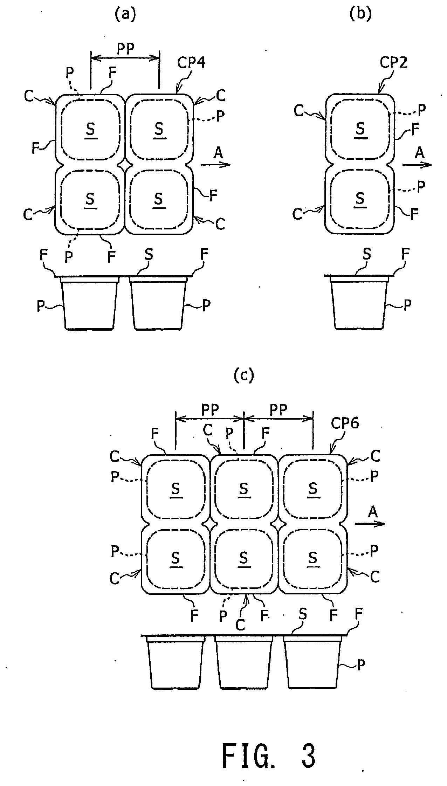

FIG. 1 is a front view illustrating an overall structure of a label fitting system 10 including a container transport device according to an embodiment of the present invention. FIG. 2 is a top view of the label fitting system 10 illustrated in FIG. 1 as viewed from above. FIG. 3(a) illustrates a top view and a side view of a 4-pot pack, FIG. 3(b) illustrates a top view and a side view of a 2-pot pack, and FIG. 3(c) illustrates a top view and a side view of a 6-pot pack.

As illustrated in FIGs. 1 and 2, the label fitting system 10 includes a first container transport device 12, a second container transport device 14, a third container transport device 16, and a fourth container transport device 18 which are disposed, in that order, in a container transport direction denoted by arrow A. The label fitting system 10 further includes a label fitting unit 20 that is disposed along the third container transport device 16. The second container transport device 14 corresponds to a container transport device according to the present invention.

The first container transport device 12 transports a container pack CP4 composed of a 4-pot pack as illustrated in FIG. 3(a) after it is produced by a production apparatus, which is not illustrated, to feed the container pack CP4 into the label fitting system 10. The first container transport device 12 is driven to circulate an endless conveyor belt 13 so that container packs CP4 placed on the conveyor belt 13 are linearly transported in the direction of arrow A.

The fourth container transport device 18 has the function of exporting, from the label fitting system 10, container packs CP4 having labels fitted on outer peripheries of pot portions, and is configured in a similar manner as for the first container transport device 12 described above.

Referring to FIG. 3(a), the container pack CP4 integrally includes two rows by two sets of, a total of four, containers C. Each of the containers C has a pot portion P that is recessed so that it can contain contents such as yogurt, a flange portion F that is formed on the perimeter of an upper opening of the pot portion P to project laterally, and a sheet lid S that seals the upper opening of the pot portion P. These four containers C are integrally connected by edge portions of the flange portions F that have approximately square outlines.

The pot portion P of each of the containers C is formed to have an upper opening of an approximately rectangular shape with rounded comers. Side walls of the pot portion P are formed to have a shape that is tapered from the top opening toward the bottom located at its lower end. The pitch between pot portions P of two containers C that are adjacent to each other in the container transport direction A in a container pack CP4 integrally including four containers C is set to a predetermined pitch PP that is defined by a forming die of a forming machine, which will be described later. Further, a through hole having an approximately rectangular shape is formed in a center portion of the container pack CP4 that is surrounded by the flange portions F of the four containers C. Still further, a trade name or other information, which is not illustrated, is printed on the lids S that seal the upper openings of the containers C. A shallow rupture-facilitating groove for facilitating the rupture and separation into individual containers C may be formed in a connecting portion between the flange portions F.

For example, a container pack CP4 as described above may be produced by a method described below. First, a resin sheet is supplied to a forming machine of a production apparatus. In the forming machine, this resin sheet is placed in a forming die including a male die having aligned projections for forming pot portions and a female die having aligned recesses for forming inner surfaces of a shape conforming to the outer circumferential surfaces of the pot portions. Recesses corresponding to the pot portions P of the containers C are formed in this manner. The above-described operation for forming pot portions, including the steps of intermittently supplying a resin sheet and closing and opening the forming die, is repeated to form a container intermediate product including a plurality of pot portions P that are formed with a predetermined pitch PP.

The container intermediate product fed from the forming machine is then supplied to a filling machine. In the filling machine, contents such as yogurt are injected and filled into the pot portions P of the container intermediate product through the upper openings. Subsequently, the sheet lid S is affixed to the flange portions F on the upper surface of the container intermediate product to hermetically seal the upper openings of the pot portions P. A container pack continuous product including a plurality of container packs CP4 that are connected by the flange portions F is fed from the filling machine.

The container pack continuous product is then split into the container packs CP4, each container pack integrally including a predetermined number of containers C. In the illustrated embodiment, the container pack continuous product is split so that each container pack integrally includes two rows by two sets of, a total of four, containers C, as described above, to produce the container packs CP4. Subsequently, the container packs CP4 are supplied onto the conveyor belt 13 of the first container transport device 12 to be transported to the second container transport device 14.

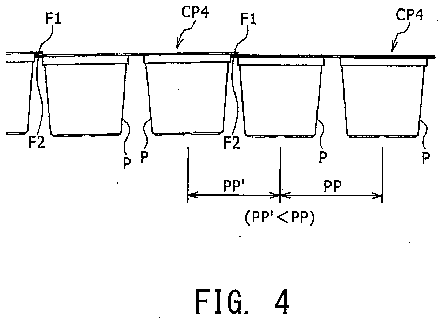

Referring again to FIGs. 1 and 2, the container packs CP4 transported from the production apparatus by the first container transport device 12 are temporarily accumulated in a container storage section 22 before entering the second container transport device 14. At this time, the container packs CP4 that are adjacent to each other in the container transport direction A on the conveyor belt 13 of the first container transport device 12 may receive a pressing force from upstream in the transport direction in the container storage section 22 to cause a state in which a flange portion F1 of a following container pack CP4 has climbed up onto (or has slipped into below) a flange portion F2 of a leading container pack CP4 as illustrated in FIG. 4.

In such cases, a pot pitch PP' between a pot portion P of the leading container pack CP4 located upstream in the container transport direction and a pot portion P of the following container pack CP4 located downstream in the container transport direction is shorter than the pot pitch PP between containers integrally included in a container pack CP4. The label fitting unit 20, which will be described later, is configured to fit tubular labels in an open state on the outer peripheries of the pot portions P of the containers C using mandrel units that are aligned with an arrangement pitch corresponding to the above-described predetermined pot pitch PP. As such, if, as described above, the container packs CP4 are supplied to the label fitting unit 20 without correcting a pot pitch deviation from the predetermined pot pitch PP, labelling failure or poor labelling is likely to occur. As such, in the label fitting system 10 of the illustrated embodiment, the second container transport device 14, which will be described below, is configured to transport the container packs CP4 by performing pitch-feeding to cause a transport pitch between the pot portions P of the container packs CP4 to be equal to the predetermined pot pitch PP.

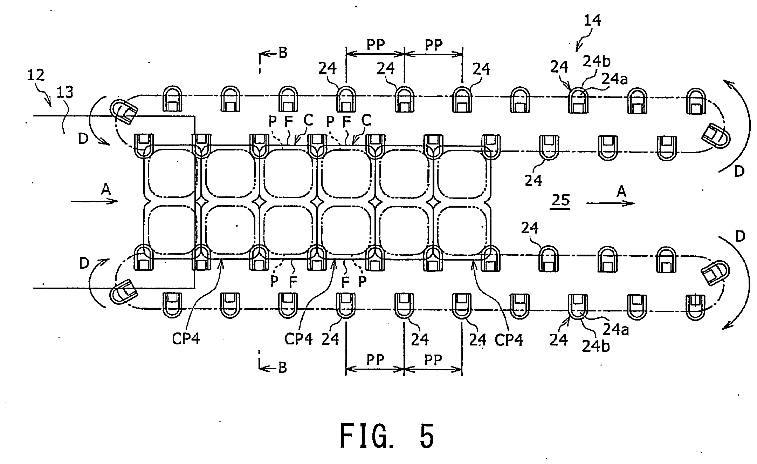

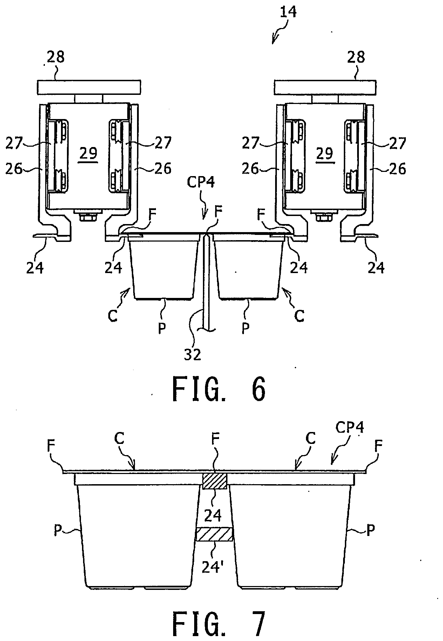

Next, the second container transport device 14 according to the illustrated embodiment will be described below. FIG. 5 illustrates a manner in which moving tabs 24 that constitute the second container transport device 14 circulate, as viewed from above. FIG. 6 is a cross-sectional view taken along B-B in FIG. 5.

As illustrated in FIG. 5, the second container transport device 14 includes a plurality of moving tabs 24 that move in the container transport direction A on both sides of a container transport path 25 that is linear and is contiguous to the first container transport device 12. The plurality of moving tabs 24 are configured to circulate in the directions of arrows D while drawing an approximately track-like movement trajectory on both sides of the container transport path 25. Driving mechanisms for the moving tabs 24 that move linearly along the container transport path 25 shaped like a linear band may have the same structure on both sides of the container transport path 25. Therefore, a driving mechanism located on one side will be described below.

As illustrated in FIG. 6, the moving tabs 24 are attached in a horizontal position to lower ends of brackets 26 each having an approximately L-shaped side surface. The brackets 26 are fixed to an endless belt 27 by, for example, bolt fixing. The moving tabs 24 are attached to the belt 27 via the brackets 26 with the same pitch as the predetermined pitch PP between two pot portions P that are adjacent to each other in the container transport direction A in a container pack CP4.

The belt 27 is looped over pulleys 29 that are disposed at both ends of the second container transport device 14 in the container transport direction A. These pulleys 29 are rotatably supported by a frame 28. The frame 28 is supported at a predetermined height by a plurality of legs (not illustrated) that are vertically disposed on the first container transport device 12 or the label fitting unit 20. Further, a motor 30 (see FIG. 1) for driving one of the pulleys 29 to rotate is disposed on the frame 28. As the motor 30 drives one of the pulleys 29 to rotate, the belt 27 circulates to cause the moving tabs 24 attached to the belt 27 to circulate while maintaining the predetermined pitch PP.

Although, in the illustrated embodiment, the belt 27 is used as a movement component for causing the moving tabs 24 to circulate, the present invention is not limited to this example. The moving tabs 24 may be configured to circulate using a chain that is caused to circulate in a track-like manner by at least two sprockets.

It is preferred that, as illustrated in FIG. 6, a sag preventing component 32 is provided for preventing sagging of a center of a container pack CP4 that is transported in a suspended manner by the moving tabs 24 that move on both sides of the container transport path 25. The sag preventing component 32 may be composed of a plate component that comes into abutment with lower surfaces of the flange portions F that connect at the center between two containers C that are adjacent to each other in a direction perpendicular to the container transport direction A. This configuration allows transport of the container packs CP4 in a suspended manner by the action of the second container transport device 14 while preventing center portions of the container packs CP4 from sagging due to the weight of contents contained in the containers C, and allows stable transport of the container packs CP4 in a suspended manner. Although, in the illustrated embodiment, the sag preventing component 32 is composed of a plate component, the present invention is not limited to this example. The sag preventing component may be composed of, for example, a wire.

Referring to FIGs. 5 and 6, each of the moving tabs 24 has a supporting upper surface 24a and a tip outer circumferential surface 24b. The supporting upper surface 24a comes into abutment with lower surfaces of the flange portions F of the containers C included in the container packs CP4 to support them in a suspended manner. The tip outer circumferential surface 24b fits between the pot portions P of the containers C to come into contact with outer peripheries of two pot portions P that are adjacent to each other in the transport direction A. In the illustrated embodiment, it is preferred that the tip outer circumferential surfaces 24b of the moving tabs 24 are formed in a semicircular shape. The formation of the tip outer circumferential surfaces 24b in such a shape allows smooth entry between container packs CP4 having a narrow interval between pot portions P as the interval between the pot portions P is increased, as will be described later, and allows pitch-feeding of the container packs CP4 with the transport pitch being adjusted to the predetermined pitch PP.

Transport modes of the second container transport device 14 include a GO STOP mode and a RANDOM FEED mode. The GO STOP mode is a transport mode in which, as illustrated in FIGs. 1 and 2, a plurality of container packs CP4 temporarily stored in the container storage section 22 are transported in a stroke toward downstream while the pitch-feeding of the container packs CP4 is being performed by the second container transport device 14 to pass them to the third container transport device 16. In contrast, the RANDOM FEED mode is a transport mode in which, after one container pack CP4 transported by the first container transport device 12 comes to the second container transport device 14, the motor 30 intermittently drives the moving tabs 24 to move forward by an amount of one container pack CP4, and, after a second container pack CP4 comes, the moving tabs 24 further move forward by a corresponding amount, and then, after a third container pack CP4 comes, the moving tabs 24 continuously move forward so that the three container packs CP4 including a total of twelve containers C are transported as a group and passed to the third container transport device 16. In the RANDOM FEED mode, as the pot portions P of the second and third container packs CP4 that are sequentially transported come into abutment with the tip outer circumferential surfaces of the moving tabs 24, the pitch-feeding of the pot portions P of the container packs CP4 is performed.

FIG. 7 is an enlarged view illustrating a manner in which a moving tab 24 engages between pot portions P of two containers C of a container pack CP4. As illustrated in FIG. 7, a moving tab 24' may be configured to engage on inclined side wall surfaces of pot portions P of two containers C of a container pack CP4 to transport the container pack CP4 in a suspended manner. However, in this case, as the engagement position of the moving tabs 24 may vary due to variations in shape of pot portions P arising from, for example, production errors of containers C, the height position at which container packs are transported in a suspended manner may be unstable or the pitch-feeding of pot portions may be inaccurate. In contrast, the illustrated embodiment is configured to bring the supporting upper surface 24a of a moving tab 24 into abutment with lower surfaces of flange portions F of containers C included in a container pack CP4, and to bring the tip outer circumferential surface 24b of the moving tab 24 into contact with outer peripheries of upper ends of the pot portions P. This configuration stabilizes the transport height of the container packs CP4, and allows accurate pitch-feeding of the container packs CP4 that are continuously transported by the moving tabs 24, with the pot-to-pot pitch being adjusted to the predetermined pitch PP described above.

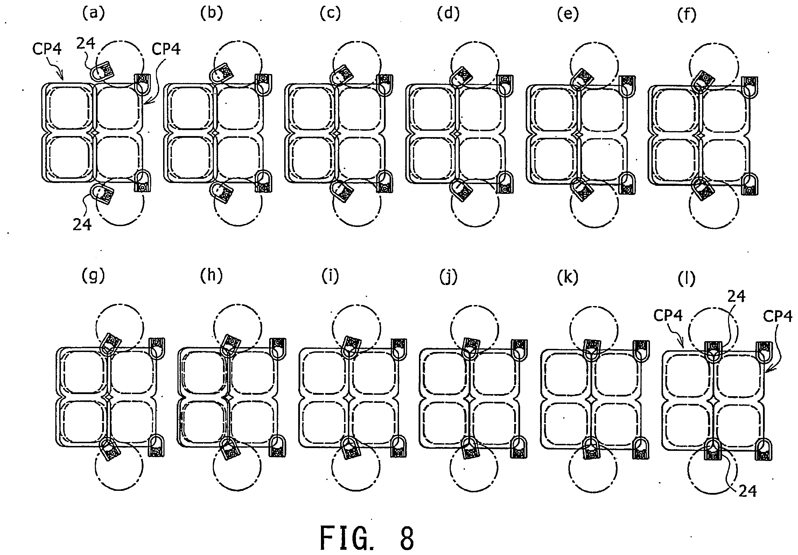

FIGs. 8(a) through 8(l) illustrate, step by step, a manner in which the moving tabs 24 enter between adjacent container packs CP4 along a circular movement trajectory to perform pitch-feeding with the pot-to-pot pitch being adjusted to a predetermined pitch. In each of FIGs. 8(a) through 8(l), two right-side containers C are of a leading container pack CP4 (located downstream in the container transport direction A) in the container storage section 22 of the first container transport device 12, and two left-side containers C are of a following container pack CP4 (located upstream in the container transport direction A); the remaining containers C of the container packs CP4 are not illustrated. In FIG. 8(a), as described above with reference to FIG. 4, as the flange portions F of the container packs CP4 overlap each other, the pitch between the pot portions P included in the two container packs CP4 is narrower than the predetermined pot pitch PP.

As illustrated in FIGs. 8(a) through 8(f), the moving tabs 24 that are circulated by the belts 27 in the second container transport device 14 turn around the pulleys 29 located upstream in the container transport direction to enter between the pot portions P of the two adjacent containers C of the two container packs CP4 while drawing a circular movement trajectory. The circular tip outer circumferential surfaces of the moving tabs 24 then come into contact with the outer peripheries of the upper ends of the pot portions P of the leading container pack CP4 to serve so as to feed the container pack CP4 in the container transport direction A. At this time, the tip outer circumferential surfaces 24b of the moving tabs 24 also come into contact with the outer circumferential surfaces of the upper ends of the pot portions P of the containers C of the following container pack CP4 to serve so as to temporarily block the transport of the following container pack CP4 while the moving tabs 24 that are circularly moving and entering are fitting between the above-described two pot portions. As illustrated in FIGs. 8(g) through 8(i), this will gradually remove the overlap of the flange portions F of the two container packs CP4. As illustrated in FIGs. 8(j) through 8(l), as a transition from a circular movement trajectory to a linear movement trajectory of the moving tabs 24 occurs, the above-described overlap of the flange portions F of the two container packs CP4 is completely removed to achieve accurate pitch-feeding with the predetermined pitch PP being maintained between the pot portions P of the container packs CP4.

As described above, by employing the second container transport device 14 of the illustrated embodiment, each of a plurality of moving tabs 24 that move in the container transport direction A on both sides of the container transport path 25 fits between a pot portion P of a container C located upstream in the transport direction of the container packs CP4 that are continuously transported and a pot portion P of the following adjacent container C. The transport in a suspended manner is performed while the pitch-feeding is being performed with the pot pitch of the containers C being adjusted to the predetermined arrangement pitch PP of the mandrel units for the label fitting step, which will be described later. As a result, the label fitting operation of fitting labels on the outer peripheries of the pot portions P of the containers in the subsequent step can be performed reliably and stably.

Although, in the illustrated embodiment, the moving tabs 24 that circulate on both sides of the container transport path 25 in the second container transport device 14 are provided, the present invention is not limited to this embodiment. The moving tabs 24 that circulate as described above may be provided only on one side of the container transport path 25. In this configuration, on another side of the container transport path 25, a supporting component such as a wire or a plate may be provided along the container transport path 25 to come into abutment with and support the lower surfaces and the side edges of the flange portions F of the container packs CP4.

Referring again to FIGs. 1 and 2, the container packs CP4 that are transported by the second container transport device 14 with the predetermined pitch PP as described above are passed to the third container transport device 16. The third container transport device 16 includes an endless conveyor belt 34 having a lower surface that linearly moves in the container transport direction A. The conveyor belt 34 is a suction transport belt that transports, when driven to rotate at a constant speed, the container packs CP4 for which the pitch-feeding has been performed by the second container transport device 14 with the predetermined pitch PP, while maintaining the state of the container packs CP4 and sucking the top surfaces of the container packs CP4.

The conveyor belt 34 has a plurality of through holes, which are not illustrated. Inside the conveyor belt 34 that is in the form of a loop, a suction box 36 is disposed adjacent to the lower surface of the conveyor belt 34. The bottom wall of the suction box 36 has a slit 38 extending in the container transport direction A. The suction box 36 is connected to a suction source such as a pump, which is not illustrated. This configuration allows the conveyor belt 34 of the third container transport device 16 to suck the top surfaces of the container packs CP4 (in other words, the upper surfaces of the container packs CP4 sealed by the lids S) that are transported by the second container transport device 14 against the lower surface of the belt to transport the container packs CP4 in a suspended manner. In this process, the transport in a suspended manner is performed while the pitch between the container packs CP4 for which the pitch-feeding is performed by the second container transport device 14 is being maintained.

Next, referring again to FIGs. 1 and 2, the label fitting unit 20 of the label fitting system 10 according to the illustrated embodiment will be described below.

As illustrated in FIG. 1, the label fitting unit 20 is disposed below the third container transport device 16 that transports the container packs CP4 in a suspended manner. As illustrated in FIG. 2, if it is assumed that the space from which an operator OP can operate the label fitting system 10 is the front, and that the opposite side that is across the third container transport device 16 is the back, the label fitting unit 20 is disposed at a position at which its front portion overlaps the third container transport device 16.

The label fitting unit 20 includes a plurality of mandrel heads 40 for fitting tubular labels L on the outer peripheries of the pot portions P of the container packs CP4 that are transported by the third container transport device 16 in a suspended manner, and a mandrel movement device 42 for circulating the mandrel heads 40 along an approximately track-like movement trajectory.

The mandrel movement device 42 includes a drive pulley 44 and a follower pulley 46 that are spaced apart from each other by a predetermined interval, and an endless belt 48 that is looped over the pulleys 44 and 46. The drive pulley 44 is connected so as to be driven to rotate by a motor 49. The plurality of mandrel heads 40 described above are attached to an outer circumferential surface of the belt 48 with a predetermined pitch. With the above-described configuration, as the drive pulley 44 is driven to rotate by the motor 49, the belt 48 rotates in the arrow direction. As a result, the plurality of mandrel heads 40 attached to the belt 48 circulate along a track-like or loop-like circulation path. More specifically, the mandrel heads 40 are configured to move through a linear section 47 in the front portion of the label fitting unit 20. As the linear segment movement path of the mandrel heads 40 is located directly below the third container transport device 16, the mandrel heads 40 can fit labels on the outer peripheries of the pot portions P of the containers C at a label fitting position β while being translated in synchronization with the container packs CP4 that are transported in a suspended manner by the third container transport device 16.

The label fitting unit 20 is also provided with a label forming unit 50. The label forming unit 50 has the function of forming tubular labels by cutting a long sheet of label material into predetermined lengths and passing them by fitting them on the outer peripheries of mandrels of the mandrel heads 40 with the labels in an open state.

In the illustrated embodiment, the label forming unit 50 is disposed to pass the labels to the mandrel heads 40 at a label supply position α that is on a circular movement trajectory before the mandrel heads 40 go around the follower pulley 46 and reach the linear section 47. This configuration has an advantage in that, because a relatively large clearance is formed between the mandrel heads 40 in a region in which the mandrel heads 40 circularly move as described above, the operation of supplying labels to the mandrel heads 40 can be performed reliably without any interference between the mandrel heads 40. However, the present invention is not limited to this embodiment; the label forming unit 50 may be disposed in a different region of the label fitting unit 20 (for example, in the back region of the label fitting unit 20).

As described above, in the illustrated embodiment, the label forming unit 50 is disposed to form labels and pass the labels to the mandrel heads 40 at a position that is deviated from the container transport path of the third container transport device 16 in the label fitting system 10 as viewed from above. This configuration allows continuing the label supply operation of the label forming unit 50 without any interruption even when contents contained in the containers C of the container packs CP4 spill down due to a certain trouble at the label fitting position β, because the label forming unit 50 including a cutting unit is not present below the spilling contents. Therefore, the capacity utilization of the label fitting system 10 is increased, and the productivity can be improved.

The circulation path of the mandrel movement device 42 along which the plurality of mandrel heads 40 circulate extends from a position that overlaps the label fitting position β of the linear container transport path in the third container transport device 16 to go around the back side of the container transport path and pass through the label supply position α to go back to the label fitting position β. This configuration has an advantage in that, because the circulation path of the mandrel heads 40 is disposed only on the back side of the label fitting system 10 as described above, the front side of the label fitting position β can be used as an operation space for the operator OP, and the ease of operation is improved.

The label fitting unit 20 may also be provided with a cleaning station 200 and a drying station 300. These stations 200 and 300 will be described later.

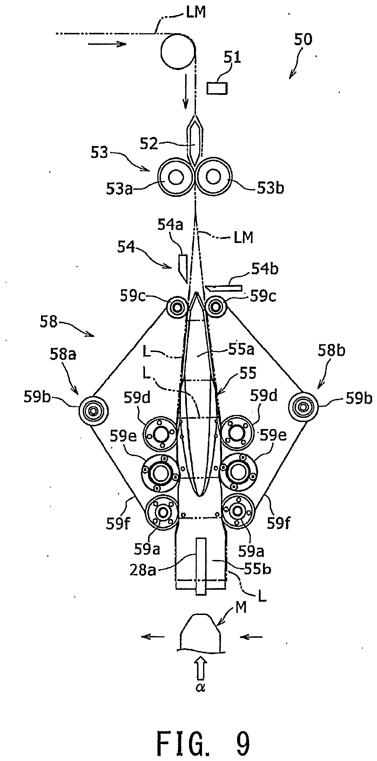

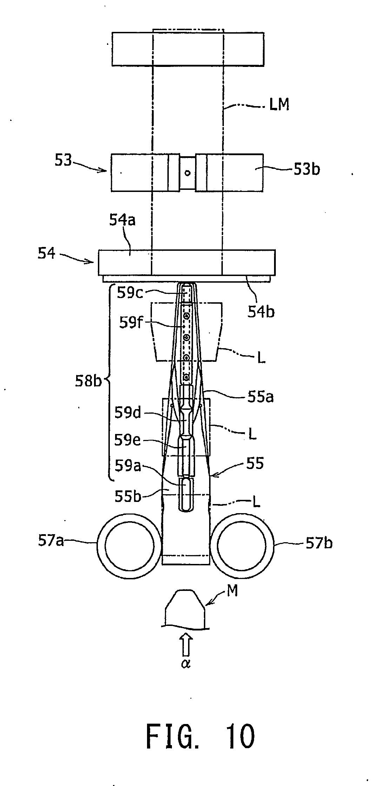

FIG. 9 is a front view of the label forming unit 50 that is provided in the label fitting unit 20, and FIG. 10 is a side view of the label forming unit 50. In FIGs. 9 and 10, label material LM and labels L that are formed by cutting the label material LM are illustrated by chain double-dashed lines.

As illustrated in FIGs. 9 and 10, the label forming unit 50 is configured to, while separating individual labels L from label material LM that is composed of a continuous tubular label L that is flattened in a sheet, sequentially release the labels L at the label supply position α so that the labels L are passed to mandrels M of the mandrel heads 40 that are sequentially transferred by the mandrel movement device 42.

The label forming unit 50 includes a mark sensor 51, an inner guide 52, a pitch feeding roller pair 53, a cutting unit 54, a label shaping guide component 55, a pair of shot rollers 57a and 57b, and a transfer unit 58 which are disposed, in that order, from above.

The mark sensor 51 detects a cut mark that is printed or otherwise formed on the label material LM. The operation of, for example, the pitch feeding roller pair 53 or the cutting unit 54, which will be described later, is controlled based on a mark detection signal output from the mark sensor 51.

The inner guide 52 is disposed below the mark sensor 51 and is placed inside the tubular label material LM that is in continuous form and is transported continuously. The inner guide 52 serves to guide the label material LM to vertically enter the pitch feeding roller pair 53.

The pitch feeding roller pair 53 is composed of a pair of rollers: a drive roller 53a and a follower roller 53b for intermittently feeding the label material LM with a predetermined pitch toward the cutting position. The drive roller 53a is driven to rotate by a motor such as a servomotor or a stepping motor, which is not illustrated. This motor is intermittently driven and controlled based on the mark detection signal output from the mark sensor 51, to feed the label material LM downward in units of predetermined cut lengths from between the rollers 53a and 53b of the pitch feeding roller pair 53.

The cutting unit 54 is a cutter including a fixed blade 54a and a movable blade 54b for sequentially cutting the label material LM that is fed downward in units of predetermined lengths from the pitch feeding roller pair 53 to form individual labels L. The movable blade 54b is driven to reciprocate by a motor such as a servomotor or a stepping motor, which is not illustrated, and is controlled based on the mark detection signal output from the mark sensor 51, to operate to cut a label L from the label material LM during a pause of the feeding operation of the label material LM by the pitch feeding roller pair 53. The cutting unit 54 may be composed of a fixed blade and a rotary movable blade.

The label shaping guide component 55 brings the label material LM fed by the pitch feeding roller pair 53 into a predetermined open state by fitting the label material LM thereon, and serves as a guide component during the downward transport of the labels L cut from the label material LM by the transport function of the transfer unit 56.

The label shaping guide component 55 has a label opening portion 55a having a tapered wedge-shaped upper end, and a label shaping portion 55b having a circular cross section that is disposed below and contiguous to the label opening portion 55a. The label material LM fitted on the upper end of the label opening portion 55a is gradually brought into an open state as it is transferred downward below the label opening portion after it is separated into individual labels L, and is shaped into a tubular open state as it is fitted on the label shaping portion 55b. The pair of shot rollers 57a and 57b are rotatably attached to a lower end of the label shaping portion 55b of the label shaping guide component 55.

The transfer unit 58 is composed of feed belt units 58a and 58b that are configured to nip a label L separated from the label material LM by the cutting unit 54 in a state in which it is fitted on the label opening portion 55a of the label shaping guide component 55, between the transfer unit 58 and the label opening portion 55a, to transfer the label L to the label shaping portion 55b. Each of the feed belt units 58a and 58b is composed of a drive pulley 59a, four follower pulleys 59b, 59c, 59d, and 59e, and an endless feed belt 59f having a narrow width (a width of, for example, on the order of a few millimeters) that is looped over the pulleys 59a, 59b, 59c, 59d, and 59e. The feed belt 59f is configured to transfer the label L to the lower end of the label shaping guide component 55 while shaping the label L in an open state as the feed belt 59f is driven to rotate in the axial direction on both sides of the label shaping guide component 55.

The pair of shot rollers 57a and 57b are disposed on the lower end of the label shaping guide component 55 at positions that are opposite to each other in the radial direction. Each of the shot rollers 57a and 57b is directly connected to a rotating shaft of a motor, which is not illustrated. This configuration allows a label L fitted on the label shaping guide component 55 to be fed downward along the outer circumferential surface of the label shaping portion 55b as the shot rollers 57a and 57b are driven to rotate, to be fitted onto a mandrel M of a mandrel head 40.

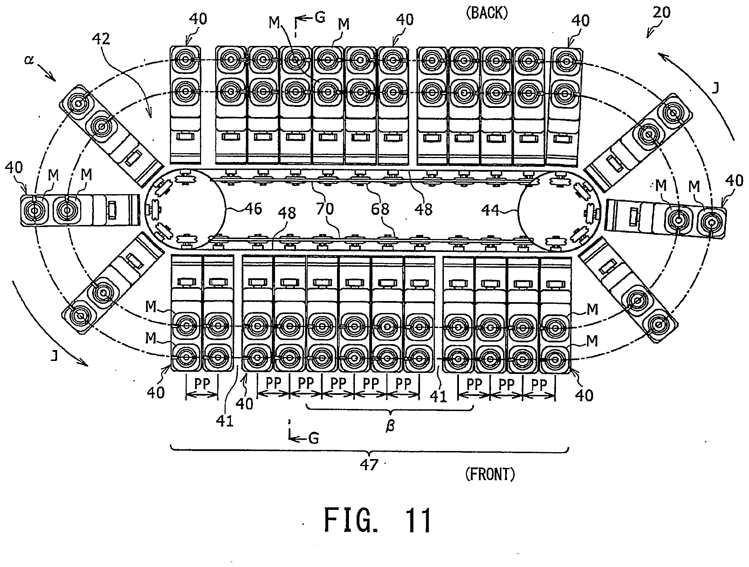

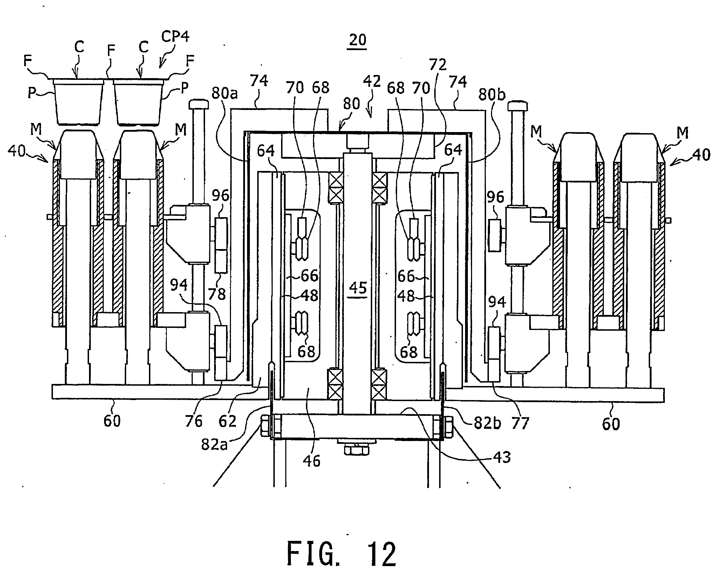

Next, the label fitting unit 20 of the illustrated embodiment will be described in more detail below with reference to FIGs. 11 and 12. FIG. 11 illustrates only the mandrel heads 40 of the label fitting unit 20 as viewed from above. FIG. 12 is a cross-sectional view taken along G-G in FIG. 11.

As illustrated in FIG. 11, and as described above, the plurality of mandrel heads 40 of the label fitting unit 20 are configured to circulate along the track-like movement path in the counterclockwise direction (the direction of arrows J) as the belt 48 looped over the drive pulley 44 and the follower pulley 46 is moved to rotate.

Each of the mandrel heads 40 of the illustrated embodiment includes two mandrels M that are disposed side by side, to conform to the above-described configuration in which the first, second, and third container transport devices 12, 14, and 16 transport the container packs CP4 in a manner such that the containers C are arranged in two rows in the direction perpendicular to the container transport direction A. Such mandrel heads 40 are configured to move in the linear section 47 of the mandrel movement device 42 in groups of six mandrel heads 40 including twelve mandrels M aligned with a predetermined pitch PP. The predetermined pitch PP is the same as the pot pitch between the pot portions P of the containers C that are integrally included in a container pack CP4 and the transport pitch PP between two adjacent pot portions P of the container packs CP4 for which pitch-feeding is performed by the second container transport device 14. In the illustrated embodiment, while six mandrel heads 40 aligned as described above are moving in the linear section 47 as a group aligned with the predetermined pitch PP, tubular labels L lifted from the mandrels M are fitted from below on the pot portions P of the container packs CP4 that are transported above the mandrel heads 40 in synchronization with the mandrel heads 40 by the third container transport device 16.

The mandrel heads 40 are attached to the belt 48 on the inner side of the loop-like circulation path with the predetermined pitch PP as described above. However, clearances 41 are formed upstream and downstream of a group of six mandrel heads 40 in the movement direction in the linear section 47 between this group of mandrel heads 40 and other groups of mandrel heads 40. The clearances 41 are formed to be greater than clearances between the six mandrel heads 40 in a group. Such clearances 41 allow use of the same mandrel movement device 42 even when the mandrel heads 40 must be replaced in order to fit labels on container packs of a different shape and size.

As illustrated in FIG. 12, the label fitting operation is performed while the mandrel heads 40 are being translated with two mandrels M included therein kept opposed to the bottoms of two pot portions P aligned in a container pack CP4 that is transported in a suspended manner by the third container transport device 16, in a non-contact state with a clearance (a clearance of, for example, on the order of a few to ten millimeters) between the two mandrels M and the two pot portions P. During the label fitting operation, the container packs CP4 and the mandrels M linearly move in the horizontal direction without any vertical movement. As such, the label fitting operation of fitting labels on the pot portions P of the container packs CP4 can be performed stably even when the container transport speed is increased. As the label fitting operation is performed with the upper ends of the mandrels M kept out of contact with the bottoms of the pot portions P, the pot portions P of the containers C included in the container packs CP4 will not be damaged.

The label fitting unit 20 of the illustrated embodiment has a configuration in which six mandrel heads 40 including twelve mandrels M move in the linear section 47 as a group in which they are aligned with the predetermined pitch PP. With this configuration in which six mandrel heads 40 including twelve mandrels M, which is the least common multiple of two pots, four pots, and six pots, move as a group, the label fitting unit 20 can be used not only for 4-pot packs CP4 as described with reference to the illustrated embodiment, but also for 2-pot packs CP2 having two containers C integrally connected via flange portions F in units of two rows by one set (see FIG. 3(b)) or for 6-pot packs CP6 having six containers C integrally connected via flange portions F in units of two rows by three sets (see FIG. 3(c)) without changing parts (or without changing dies).

More specifically, for 2-pot packs CP2, six 2-pot packs CP2 including a total of twelve containers C are pitch-fed by the second container transport device 14 with the predetermined pitch PP, and then passed to the third container transport device 16 and transported in a suspended manner to the label fitting position β. For 4-pot packs CP4, three 4-pot packs CP4 including a total of twelve containers C are pitch-fed by the second container transport device 14 with the predetermined pitch PP, and then passed to the third container transport device 16 and transported in a suspended manner to the label fitting position β. For 6-pot packs CP6, two 6-pot packs CP6 including a total of twelve containers C are pitch-fed by the second container transport device 14 with the predetermined pitch PP, and then passed to the third container transport device 16 and transported in a suspended manner to the label fitting position β. The label fitting unit 20 of the illustrated embodiment can fit labels on any of 2-pot packs CP2, 4-pot packs CP4, and 6-pot packs CP6 in this manner. Therefore, the flexibility in use of the label fitting system 10 is improved, and the equipment costs can be reduced.

In the above-described embodiment, the clearances 41 are formed before and after a group of six mandrel heads 40 in the transport direction. To provide corresponding clearances between the container packs that are transported by the third container transport device 16, for example, the transport speed of the second container transport device 14 (in other words, the speed at which the moving tabs 24 are moved by the motor 30) may be reduced or otherwise controlled at the time when the container packs are passed from the second container transport device 14 to the third container transport device 16.

However, if only container packs each integrally including a specific number of containers C, such as 4-pot packs, are to be considered, it is unnecessary to provide the clearances 41 as described above; all mandrel heads 40 may be attached to the belt 48 with a pitch, for example, corresponding to the predetermined pitch. Even in that case, the system can be flexibly used for 2-pot packs CP2, 4-pot packs CP4, and 6-pot packs CP6 as in the above-described embodiment.

Next, the mandrel movement device 42 of the label fitting unit 20 will be described in detail below with reference to FIG. 12. Two mandrels M of each mandrel head 40 are supported in a state in which the lower ends of the mandrels M are vertically disposed on a base plate 60 that is made of, for example, a metal. A bracket 62 is fixed to an inner circumferential end of the base plate 60 by a fixing means such as a bolt. The bracket 62 is attached to the belt 48 with an outer side attachment component 64 being interposed therebetween, by a fixing means such as a bolt and a nut. An inner side attachment component 66 is disposed on the inside of the belt 48, and the mandrel heads 40 are fixed to the belt 48 by a fixing means such as a bolt and a nut with the belt 48 being sandwiched between the above-described outer side attachment component 64 and the inner side attachment component 66. As described above, the mandrel heads 40 are attached to the belt 48 in a cantilevered state.

Two rollers 68 are rotatably attached to the inner side attachment component 66 at positions that are apart from each other by a predetermined distance in the vertical direction. The upper roller 68 of these rollers 68 is in abutment with a lower surface of a rail component 70 that is fixed at a predetermined position in the mandrel movement device 42. As such, the weight of the mandrel heads 40 that circulate along with the belt 48 in a cantilevered state is supported by the rollers 68 and the rail component 70.

The belt 48 is looped over the drive pulley 44 and the follower pulley 46 as described above, and circulates as the drive pulley 44 is driven to rotate by the motor 49 (see FIG. 2). Each of the pulleys 44 and 46 is rotatably supported by a shaft 45 that is vertically disposed on a base frame 43 of the mandrel movement device 42. FIG. 12 illustrates the follower pulley 46, and the shaft 45 that supports the follower pulley 46.

The mandrel movement device 42 has a top cover 80 having a rectangular cross section with one side open. The top cover 80 is fixed to a frame 72 that is fixed to an upper end of the shaft 45 that is vertically disposed on the base frame 43, by a fixing means such as a screw. The top cover 80 has a front wall 80a and a back wall 80b, each of which hangs down from above on the outer side of the brackets 62 of the mandrel heads 40 and has a lower end extending to a position that is close to upper surfaces of the base plates 60.

On the other hand, a front lower cover 82a and a back lower cover 82b are attached to the base frame 43. Each of the front lower cover 82a and the back lower cover 82b extends upward in a clearance that is formed in a lower area between the bracket 62 of the mandrel head 40 and the outer side attachment component 64, and has an upper end that is located above the lower ends of the front and back walls 80a and 80b of the top cover 80.

The above-described coverage by the top cover 80 and the front and back lower covers 82a and 82b enables reliable prevention of entrance of a cleaning liquid into the mandrel movement device 42 when the mandrel heads 40 are washed, which will be described later.

A fixing component 74 having an L-shaped cross section or side surface is attached to a top plate portion of the top cover 80 on each of the front side and the back side of the mandrel movement device 42. A first cam plate 76 and a second cam plate 78 are fixed to the front of the mandrel movement device 42 by the fixing component 74. The first cam plate 76 and a first cam follower 94 of the mandrel head, which will be described later, together constitute a first cam mechanism. The second cam plate 78 and a second cam follower 96 of the mandrel head 40, which will be described later, together constitute a second cam mechanism.

On the other hand, a supporting plate 77 is fixed to the back of the mandrel movement device 42 by the fixing component 74. The supporting plate 77 has an upper surface that extends in the horizontal direction, and the first cam follower 94 of the mandrel head 40 is in abutment with this upper surface. The weight of structural components (including label feeding guides, lifting plates, and first and second connecting components) of the mandrels M included in the mandrel head 40 are supported in this manner.

Although in an example in the foregoing description, the belt 48 is used as a movement component for causing the mandrel heads 40 to circulate, the present invention is not limited to this example. For example, a plurality of chains may be configured to circulate by a plurality of sprockets, and the mandrel heads 40 may be connected to these chains.

Although in an example in the foregoing description, the mandrel heads 40 circulate in a cantilevered state, wheels may be attached to the base plates 60 of the mandrel heads 40, and the mandrel heads may be configured to circulate in a state in which the wheels sit in a rail that is fixed to the base frame 43. This configuration allows more stable support of the mandrel heads.

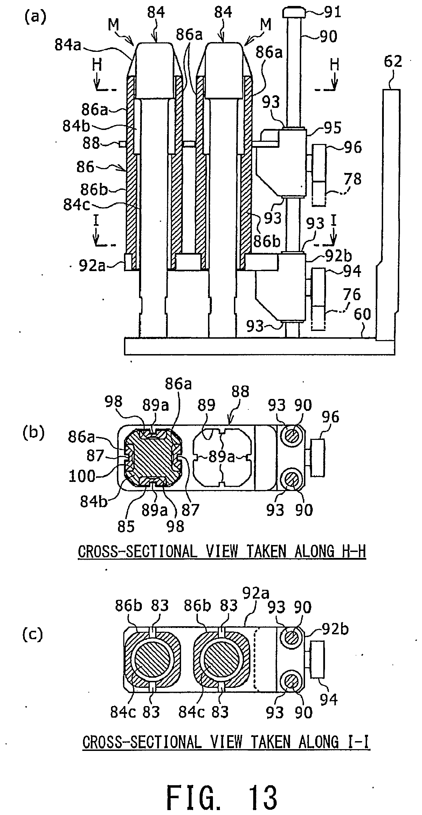

Next, the structure and the operation of the mandrel heads 40 will be described in more detail below with reference to FIGs. 13 to 15. FIG. 13(a) is a front view including a partial cross section of a mandrel head 40. FIG. 13(b) is a cross-sectional view taken along H-H in FIG. 13(a). FIG. 13(c) is a cross-sectional view taken along I-I in FIG. 13(a).

As illustrated in FIG. 13(a), the mandrel head 40 includes two mandrels M, a base plate 60 that supports lower ends of the mandrels M, and a bracket 62 that is fixed to an inner circumferential end of the base plate 60 (on the right side in FIG. 13(a)) and that extends upward in parallel to the mandrels M. The mandrels M are vertically disposed on the base plate 60 with a pitch that is equal to that of two pot portions P that are adjacent to each other in a direction perpendicular to the container transport direction A (see FIGs. 1 and 2).

It is preferred that the base plate 60 of the mandrel head 40 is composed of a lightweight and anticorrosive metal plate. Specifically, for example, an aluminum plate may be used as the base plate 60. However, the present invention is not limited to this example; a flat plate that is made of a lightweight and anticorrosive resin may also be used as the base plate 60.

Each of the mandrels M includes a mandrel shaft 84 that has a lower end fixed to the base plate 60 and that extends upward, a label feeding guide 86 that is disposed external to the periphery of the mandrel shaft 84 to be movable in the shaft axial direction (the vertical direction in the illustrated embodiment), and a lifting plate 88 that is disposed external to the periphery of the label feeding guide 86 to be movable in the shaft axial direction.

The mandrel shaft 84 is composed of a rod component that is made of, for example, a resin. In the illustrated embodiment, the mandrel shaft 84 has an upper end that is formed approximately like a frustum of a rectangular pyramid. Such a tapered upper end allows the ease of receiving labels L that are supplied downward from the label forming unit 50 in an open state.

As illustrated in FIG. 13(b), the mandrel shaft 84 has an outline shape like a square having rounded corners in an intermediate shaft portion 84b that is contiguous to the upper end shaped like a frustum of a pyramid. It is preferred that this outline shape is formed to be of a shape and a size similar to those of the maximum outline portions of the pot portions P of the containers C on which labels L are fitted. In the illustrated embodiment, as illustrated in FIG. 3(a), the pot portions P of the containers C of the container packs CP4 are tapered toward the bottoms, and the outer peripheries of the upper ends are shaped in squares having rounded corners; as such, the intermediate shaft portions 84b of the mandrel shafts 84 also have similar outline shapes.

A guide groove 98 extends in the shaft axial direction at the center position of each of sides of the square in the intermediate shaft portion 84b of the mandrel shaft 84. In other words, in the illustrated embodiment, the mandrel shaft 84 has four guide grooves 98. A lower portion 84c that is contiguous to the intermediate shaft portion 84b of the mandrel shaft 84 is formed to narrow from the intermediate shaft portion 84b having an approximately square outline shape to be a shaft portion shaped like a round rod having a circular cross section as illustrated in FIG. 13(c). The guide grooves 98 described above are formed only in the intermediate shaft portion 84b of the mandrel shaft 84.

The label feeding guide 86 of each of the mandrels M is composed of a tubular component that is formed from a resin material similar to that of the mandrel shaft 84. As illustrated in FIGs. 13(a) and 13(c), a lower portion 86b of the label feeding guide 86 has an outline shaped like a square with rounded corners similar to that of the intermediate shaft portion 84b of the mandrel shaft 84 described above, and is tubular with a circular cavity formed therein. In contrast, an upper portion of the label feeding guide 86 is composed of four guide bars 86a corresponding to the guide grooves 98 of the mandrel shaft 84. As illustrated in FIG. 13(b), each of these guide bars 86a is disposed in a corresponding one of the guide grooves 98 of the mandrel shaft 84 so as to be movable in the vertical direction. Each of the guide bars 86a has an engagement groove 87 extending in the shaft axial direction for engagement of a projecting portion 89a of the lifting plate 88, which will be described later. In this structure, it is preferred that the outer surfaces of the guide bars 86a are formed to be approximately flush with the outer circumferential surface of the intermediate shaft portion 84b of the mandrel shaft 84. This configuration allows labels L to be received and fed along the mandrel M smoothly without being hooked.

As illustrated in FIGs. 13(b) and 13(c), the lifting plate 88 for the mandrels M is a flat plate component that is made of, for example, a resin and has two through holes 89 that can receive two mandrels M. Each of the through holes 89 is formed approximately in a square that is slightly larger than the outline of the intermediate shaft portion 84b of the mandrel shaft 84. Each of four projecting portions 89a projecting toward the center portion of the through hole 89 is formed at the center position of a corresponding one of sides of the rim of the through hole 89. Each of the projecting portions 89a is disposed so as to be movable in the vertical direction while being engaged in a corresponding one of the engagement grooves 87 that are formed in the guide bars 86a of the label feeding guide 86 as described above.

Lower ends of the label feeding guides 86 of two mandrels M included in each of the mandrel heads 40 are fixed to a connecting plate 92a that is made of, for example, a resin. One end of the connecting plate 92a is fixed to a first connecting component 92b by a fixing means such as a bolt. Two guide components 90 are vertically disposed on the base plate 60 in parallel to the mandrels M. A stopper 91 is fixed to an upper end of each of the guide components 90. In this structure, it is preferred that each of the guide components 90 is composed of a round rod component that is made of, for example, an anticorrosive metal. Specifically, round rods that are made of, for example, stainless steel may be suitably used as the guide components 90.

The first connecting component 92b described above is supported so as to be slidable along the guide components 90 via bushings 93 that are made of, for example, a resin. A first cam follower 94 is rotatably attached to a side of the first connecting component 92b. The first cam follower 94 is in abutment with the first cam plate 76 of the mandrel movement device 42. The first cam follower 94 and the first cam plate 76 together constitute a first cam mechanism that causes the label feeding guide 86 of each of the mandrels M to move in the vertical direction.

One end of the lifting plate 88 of the mandrel head 40 is fixed to a second connecting component 95 by a fixing means such as a bolt. Similarly as for the first connecting component 92b, the second connecting component 95 is supported so as to be slidable along the guide components 90 via bushings 93 that are made of, for example, a resin. A second cam follower 96 is rotatably attached to a side of the second connecting component 95. The second cam follower 96 is in abutment with the second cam plate 78 of the mandrel movement device 42. The second cam follower 96 and the second cam plate 78 together constitute a second cam mechanism that causes the lifting plate 88 of the mandrel head 40 to move in the vertical direction.

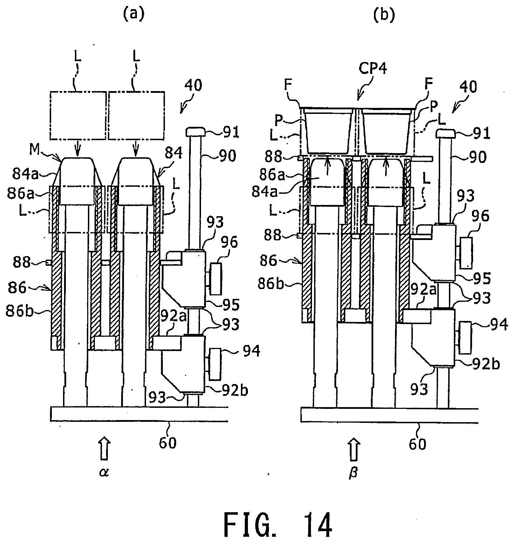

FIG. 14(a) is a front view illustrating a state of the mandrel head 40 at the label supply position α, and FIG. 14(b) is a front view illustrating a state of the mandrel head 40 at the label fitting position β.

As illustrated in FIG. 14(a), while the mandrel head 40 is passing through the label supply position α by the action of the mandrel movement device 42, tubular labels that are in an open state are supplied from the label forming unit 50 disposed above the label supply position α. At this time, the label feeding guide 86 of each of the mandrels M of the mandrel head 40 is at a label receiving position at which the label feeding guide 86 has moved down with respect to the mandrel shaft 84. In this state, the guide bars 86a of the label feeding guide 86 are located below a tapered upper end 84a of the mandrel shaft 84 so as to be received in the guide grooves 98. As such, the mandrel head 40 can smoothly and reliably receive tubular labels L on the outer peripheries of the mandrels M via the tapered upper end 84a.

In contrast, at the label fitting position β, as illustrated in FIG. 14(b), the driving of the first cam mechanism formed by the first cam plate 76 and the first cam follower 94 causes the label feeding guide 86 to move up to a predetermined height to reach a label feeding position. At the label feeding position, the upper ends of the guide bars 86a of the label feeding guide 86 are placed to project around the tapered upper end 84a of the mandrel shaft 84, so that labels L can be fed in an open state to be approximately of the same size as the outer circumferential shape of the pot portions P of the containers C. In other words, in the illustrated embodiment, a label L fitted on the outer periphery of the mandrel shaft 84 can be fed in a state in which it is kept open and in shape to be of a somewhat angular shape and a size corresponding to the outer periphery of the upper end of a pot portion P on which the label L is to be fitted.

In this state, the driving of the second cam mechanism formed by the second cam plate 78 and the second cam follower 96 causes the lifting plate 88 to move up. The projecting portions 89a of the lifting plate 88 correspondingly move up along the engagement grooves 87 of the guide bars 86a of the label feeding guide 86. As a result, the projecting portions 89a come into abutment with the lower edge of the label L fitted on the mandrel shaft 84 to lift and fit the label L from the mandrel M onto the outer periphery of the pot portion P of the container C from below.

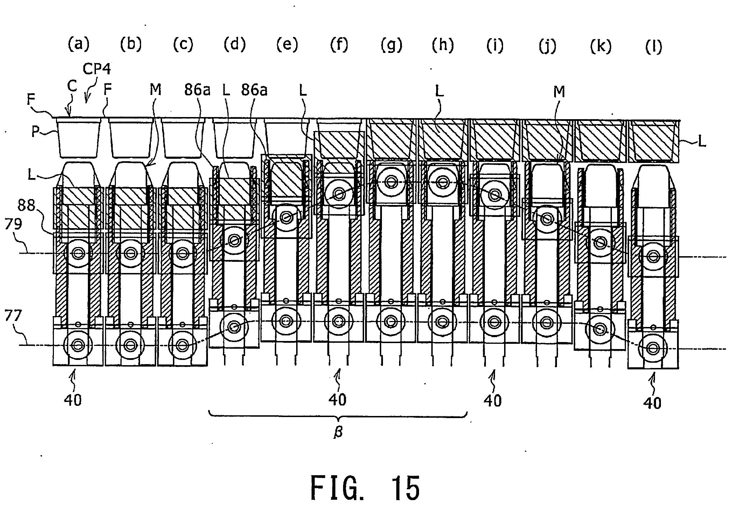

FIGs. 15(a) through 15(l) sequentially illustrate the operation in a label fitting operation of the mandrel head 40. The label fitting operation of the mandrel M proceeds from left to right in FIGs. 15(a) through 15(l). In FIG. 15, the movement trajectory of the center of the first cam follower 94 is illustrated by a chain double-dashed line 77, and the movement trajectory of the center of the second cam follower 96 is illustrated by a chain double-dashed line 79. In FIG. 15, the third container transport device 16 for transporting container packs CP4 is not illustrated.

As illustrated in FIGs. 15(a) through 15(c), the mandrel head 40 moves along the linear section 47 by the action of the mandrel movement device 42. As illustrated in FIGs. 15(d) and 15(e), as the mandrel head 40 moves to the label fitting position β, the first cam plate 76 lifts the first cam follower 94 to bring the label feeding guide 86 into the label feeding position at which the guide bars 86a of the label feeding guide 86 project around the upper end 84a of the mandrel shaft 84. At this time, it is preferred that the upper ends of the guide bars 86a move up to a position that is slightly higher than the upper end of the mandrel shaft 84 but at which they do not come into contact with the pot portion P of the container C. This configuration allows more reliable fitting of labels L fed from the mandrels M on the peripheries of the pot portions P.

In synchronization with the upward movement of the label feeding guide 86, as illustrated in FIGs. 15(d) through 15(g), the second cam plate 78 lifts the second cam follower 96 to cause the lifting plate 88 to start moving upward. The lifting plate 88 moves up to a height at which the upper surface of the lifting plate 88 is approximately flush with the upper ends of the guide bars 86a of the label feeding guide 86. As a result, the label L that is urged off the mandrel M by the lifting plate 88 is fitted on the outer periphery of the pot portion P of the container C from below.

After the label L is fitted on the outer periphery of the pot portion P, as illustrated in FIGs. 15(h) through 15(l), the lifting plate 88 moves down to a normal standby position, and as illustrated in FIGs. 15(i) through 15(l), the label feeding guide moves down from the label feeding position to the label receiving position. The mandrel head 40 is then ready for receiving a label at the label supply position α.

The container packs CP4 including the containers C having the pot portions P on which the labels L are fitted continue to be transported by the third container transport device 16. During the transport, the labels L are held in place as they are kept in contact with the outer circumferential surfaces of the pot portions P by, for example, elastic restoration force (or resilience) of the labels L. While in this state, the container packs CP4 move to the fourth container transport device 18 as the suction transport belt 34 of the third container transport device 16 removes the suction. Subsequently, while the container packs CP4 on which the labels L are fitted pass through a heating device, which is not illustrated, the labels L heat-shrink; this completes the attachment of the labels L. The container packs CP4 are then fed to a subsequent process such as packaging.

As described above, the mandrel heads 40 of the illustrated embodiment are configured to receive labels L on the mandrels M by exposing the tapered tip portions 84a of the mandrel shafts 84 to form a shape that allows labels L that are in an open state to be received easily, and are configured to feed labels L from the mandrels M toward the pot portions P of the containers C by causing the guide bars 86a to project around the above-described tapered tip portions 84a to feed the labels L in an open state to be approximately of the same shape and size as those of the upper end outer circumferential shape, which is of the maximum outline portion, of a pot portion P having a somewhat angular shape. This configuration allows a stable and reliable label fitting operation of fitting labels on the outer peripheries of the pot portions P having a non-circular, irregular shape (including, for example, a somewhat angular shape or an oval shape) with the front design position of a label L being fixed with respect to a container C.

The mandrel shaft 84, the label feeding guide 86, and the lifting plate 88 that are included in a mandrel M in the mandrel heads 40 of the illustrated embodiment are all composed of resin components. The base plate 60 is formed by an anticorrosive metal plate. As the guide components for the vertical movement of the label feeding guide 86 and the lifting plate 88, the guide components 90 are anticorrosive, and the bushings 93 that slide in contact with the guide components 90 are made of a resin. As such, if contents in the containers C spill and adhere to a mandrel head 40 for some reason during the process of fitting labels L on the pot portions P of the containers C from below, the mandrel head 40 can be washed by, for example, water and cleaned easily. Therefore, this configuration is advantageous in that good cleanliness (sanitation) of the mandrel heads 40 can be maintained especially when contents in the containers C are food such as yogurt.

Further, because the mandrel shaft 84, the label feeding guide 86, and the lifting plate 88 that are included in a mandrel M in the mandrel heads 40 of the illustrated embodiment are all composed of resin components, and because the base plate 60 is formed by a relatively lightweight metal plate, the mandrel heads 40 can be lightweight. As a result, many mandrel heads 40 can be circulated while being attached to the belt 48 in a cantilevered state, and this configuration is advantageous in that the strength design of the mandrel movement device 42 is easy.

Referring again to FIG. 2, the label fitting system 10 of the illustrated embodiment may include the cleaning station 200 in the label fitting unit 20. It is preferred that the cleaning station 200 is disposed in a region where the mandrel heads 40 move along a circular trajectory after they are transferred in the linear section 47 by the mandrel movement device 42. In this region, the mandrel heads 40 can be cleaned well because the mandrel heads 40 attached to the belt 48 with a predetermined pitch PP move with a fan-shaped large clearance between the mandrel heads 40.

The cleaning station 200 is a device for cleaning contents that have spilled down from the containers C and have adhered to the mandrel heads 40 in the linear section 47 including the label fitting position β. For example, when the contents are powder, the cleaning station 200 may be configured to blow air to blow off and clean contents that have fallen to the mandrel heads 40.

Alternatively, the cleaning station 200 may be configured to blow a cleaning liquid such as water against the mandrel heads 40 to wash the mandrel heads 40. In this configuration, it is preferred that the drying station 300 is disposed downstream of the cleaning station 200 in the circulation path of the mandrel heads 40. The drying station 300 may be configured to, for example, blow warm air against the mandrel heads 40 to dry the mandrel heads 40.

By providing the cleaning station 200 as described above, the label fitting operation can be performed with the mandrel heads 40 being kept clean, and the cleanliness (sanitation) of the label fitting unit 20 can be maintained.

The cleaning station 200, and optionally the drying station 300, described above may be operated all the time, may be operated at fixed intervals, or may be operated either manually by an operator or automatically when contents have spilled.

It should be understood that the structure of the present invention is not limited to the above-described embodiments and their modifications, and various changes or improvements can be made within the scope of the features recited in the claims of the present application and their equivalents.

### REFERENCE SIGNS LIST

10 LABEL FITTING SYSTEM
12 FIRST CONTAINER TRANSPORT DEVICE
13 CONVEYOR BELT
14 SECOND CONTAINER TRANSPORT DEVICE
16 THIRD CONTAINER TRANSPORT DEVICE
18 FOURTH CONTAINER TRANSPORT DEVICE
20 LABEL FITTING UNIT
20 LABEL FITTING UNIT
22 CONTAINER STORAGE SECTION
24 MOVING TAB
24a SUPPORTING UPPER SURFACE
24b TIP OUTER CIRCUMFERENTIAL SURFACE
25 CONTAINER TRANSPORT PATH
26 BRACKET
27, 48 BELT
28 FRAME
29 PULLEY
30, 49 MOTOR
32 SAG PREVENTING COMPONENT
34 CONVEYOR BELT OR SUCTION TRANSPORT BELT
36 SUCTION BOX
38 SLIT
40 MANDREL HEAD
41 CLEARANCE
42 MANDREL MOVEMENT DEVICE
43 BASE FRAME
44 DRIVE PULLEY
45 SHAFT
46 FOLLOWER PULLEY
47 LINEAR SEGMENT
50 LABEL FORMING UNIT
51 MARK SENSOR
52 INNER GUIDE
53 PITCH FEEDING ROLLER PAIR
53a DRIVE ROLLER
53b FOLLOWER ROLLER
54 CUTTING UNIT
54a FIXED BLADE
54b MOVABLE BLADE
55 LABEL SHAPING GUIDE COMPONENT
55a LABEL OPENING PORTION
55b LABEL SHAPING PORTION
56 TRANSFER UNIT
57a, 57b SHOT ROLLER
58 TRANSFER UNIT
58a, 58b FEED BELT UNIT
59a DRIVE PULLEY
59b, 59c, 59d, 59e FOLLOWER PULLEY
59f FEED BELT
60 BASE PLATE
62 BRACKET
64 OUTER SIDE ATTACHMENT COMPONENT
66 INNER SIDE ATTACHMENT COMPONENT
68 ROLLER
70 RAIL COMPONENT
72 FRAME
74 FIXING COMPONENT
76 FIRST CAM PLATE
77 SUPPORTING PLATE
77, 79 CHAIN DOUBLE-DASHED LINE
78 SECOND CAM PLATE
80 TOP COVER
80a FRONT WALL
80b BACK WALL
82a FRONT LOWER COVER
82b BACK LOWER COVER
84 MANDREL SHAFT
84a TIP PORTION OR UPPER END
84b INTERMEDIATE SHAFT PORTION
84c LOWER PORTION (OF MANDREL SHAFT)
86 LABEL FEEDING GUIDE
86a GUIDE BAR
86b LOWER PORTION (OF LABEL FEEDING GUIDE)
87 ENGAGEMENT GROOVE
88 LIFTING PLATE
89 THROUGH HOLE
89a PROJECTING PORTION
90 GUIDE COMPONENT
91 STOPPER
92a CONNECTING PLATE
92b FIRST CONNECTING COMPONENT
93 BUSHING
94 FIRST CAM FOLLOWER
95 SECOND CONNECTING COMPONENT
96 SECOND CAM FOLLOWER
98 GUIDE GROOVE
200 CLEANING STATION
300 DRYING STATION
A CONTAINER TRANSPORT DIRECTION
C CONTAINER
CP2, CP4, CP6 CONTAINER PACK
F, F1, F2 FLANGE PORTION
LLABEL
LM LABEL MATERIAL
M MANDREL
OP OPERATOR
P POT PORTION
PP PREDETERMINED PITCH
POT PITCH
TRANSPORT PITCH OR ARRANGEMENT PITCH
SLID
α LABEL SUPPLY POSITION
P LABEL FITTING POSITION

## Claims

1. A container transport device for transporting containers, each container having a pot portion containing contents and a flange portion laterally projecting from an outer periphery of an upper portion of the pot portion with a top opening of the pot portion being sealed by a lid, in a suspended manner with the pot portions being in a single row or a plurality of rows toward a subsequent film fitting step of fitting films on the outer peripheries of the pot portions,
wherein the container transport device performs pitch-feeding to adjust a pot pitch of the containers in a container transport direction to a predetermined pitch that is equal to an arrangement pitch of mandrel heads for fitting tubular films on the outer peripheries of the pot portions in the film fitting step,
wherein a plurality of moving tabs that move in the container transport direction are disposed on both sides or only on one side of a container transport path, each of the moving tabs having a supporting upper surface that comes into abutment with lower surfaces of the flange portions of the containers to support them in a suspended manner, and having a tip outer circumferential surface that fits between the pot portions of the containers to come into contact with outer peripheries of two pot portions that are adjacent to each other in the transport direction, and
wherein, while the containers are being continuously transported, each of the moving tabs fits between a pot portion of a container located upstream in the transport direction and a pot portion of the following adjacent container to perform the pitch-feeding with the pot pitch of the containers being adjusted to the predetermined pitch.

2. The container transport device according to claim 1, wherein, the pot portions of the containers have side surfaces that are tapered from upper ends toward lower ends, and the tip outer circumferential surface of each of the moving tabs comes into contact with outer peripheries of the upper ends of the pot portions that are contiguous to the flange portions.

3. The container transport device according to claim 1 or 2, wherein the tip outer circumferential surface of each of the moving tabs has a semicircular shape, and the moving tabs are attached to a circulating belt or chain with the predetermined pitch so as to enter the container transport path that is linear, along a circular movement trajectory.

4. The container transport device according to one of claims 1 to 3, wherein, a container pack including a plurality of containers that are integrally connected to each other by edges of the flange portions is transported with the containers being in a plurality of rows in a direction perpendicular to the container transport direction, and a sag preventing component for preventing sagging of an intermediate portion of the container pack containing the contents by supporting the lower surfaces of the flange portions that integrally connect the containers of the container pack is disposed along the container transport direction.
